(19) Europäisches Patentamt
European Patent Office
Office européen des brevets

(11) **EP 4 299 611 B1**

(12) **EUROPEAN PATENT SPECIFICATION**

(45) Date of publication and mention
of the grant of the patent:
**04.03.2026 Bulletin 2026/10**

(21) Application number: **22759276.3**

(22) Date of filing: **31.01.2022**

(51) International Patent Classification (IPC):
*C08F 8/00* (2006.01)      *C08F 214/26* (2006.01)
*H01B 3/44* (2006.01)      *C08J 5/00* (2006.01)
*H01B 7/02* (2006.01)      *H01B 7/18* (2006.01)

(52) Cooperative Patent Classification (CPC):
(C-Sets available)
**C08F 214/262; C08F 8/22; C08J 5/18;
C09D 127/18; H01B 3/445;** C08J 2327/18;
Y02A 30/00                              (Cont.)

(86) International application number:
**PCT/JP2022/003650**

(87) International publication number:
**WO 2022/181235 (01.09.2022 Gazette 2022/35)**

(54) **COPOLYMER, MOLDED BODY, INJECTION MOLDED BODY, AND COATED ELECTRICAL WIRE**

COPOLYMER, FORMKÖRPER, SPRITZGUSSKÖRPER UND BESCHICHTETER ELEKTRISCHER DRAHT

COPOLYMÈRE, CORPS MOULÉ, CORPS MOULÉ PAR INJECTION ET FIL ÉLECTRIQUE ENROBÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.02.2021 JP 2021031089
26.02.2021 JP 2021031093
30.09.2021 JP 2021162149**

(43) Date of publication of application:
**03.01.2024 Bulletin 2024/01**

(73) Proprietor: **DAIKIN INDUSTRIES, LTD.
Osaka-Shi, Osaka 530-0001 (JP)**

(72) Inventors:
• **ISAKA, Tadaharu
Osaka-shi, Osaka 530-0001 (JP)**
• **ZENKE, Yumi
Osaka-shi, Osaka 530-0001 (JP)**
• **YAMAMOTO, Yukari
Osaka-shi, Osaka 530-0001 (JP)**
• **TSUDA, Hayato
Osaka-shi, Osaka 530-0001 (JP)**

(74) Representative: **Hoffmann Eitle
Patent- und Rechtsanwälte PartmbB
Arabellastraße 30
81925 München (DE)**

(56) References cited:
EP-A- 4 223 794        EP-B1- 1 287 046
WO-A1-2005/052015      WO-A1-2015/119053
JP-A- 2002 053 620     JP-A- 2002 053 620
JP-A- 2009 059 690     JP-A- 2009 059 690
JP-A- 2010 030 276     JP-A- 2015 149 274
US-A1- 2020 332 037

(52) Cooperative Patent Classification (CPC): (Cont.)

C-Sets
**C08F 8/22, C08F 214/262;**
**C08F 214/262, C08F 216/1408**

**Description**

TECHNICAL FIELD

The present disclosure relates to a copolymer, a formed article, an injection molded article, and a coated electric wire.

BACKGROUND ART

Patent Document 1 describes a USB cable for transmitting data at superspeed at a frequency of at least 10 GHz, comprising a jacket, and positioned within the jacket at least a power cable and a plurality of shielded insulated conductors for transmitting said data at speeds up to 10 Gbps per channel, the insulator of said insulated conductors exhibiting a dielectric loss tangent of no greater than 0.00035 at 10 GHz and comprising a melt-fabricable perfluoropolymer. The melt-fabricable perfluoropolymer is composed of a tetrafluoroethylene (TFE)/hexafluoropropylene (HFP) copolymer or a tetrafluoroethylene (TFE)/perfluoro(alkyl vinyl ether) (PAVE) copolymer, wherein the alkyl group contains 1 to 5 carbon atoms. Patent Documents 2 and 3 disclose the coating of electric wires by respectively using a terpolymer comprising units derived from TFE, HFP and perfluoro(propyl vinyl ether) (PPVE) and a copolymer comprising units derived from TFE and PPVE. Patent Document 4 discloses the use of a copolymer of TFE and PPVE for the preparation of articles by injection moulding.

RELATED ART

PATENT DOCUMENTS

Patent Document 1: Japanese Translation of PCT International Application Publication No. 2018-523272
Patent Document 2: US 2020332037 A1
Patent Document 3: JP 2009059690 A
Patent Document 4: EP 1287046 B1

SUMMARY OF THE INVENTION

PROBLEM TO BE SOLVED BY THE INVENTION

An object of the present disclosure is to provide a copolymer that is capable of obtaining an injection molded article having excellent surface smoothness by injection molding in a high productivity, that is capable of easily forming a thin coating layer having a uniform thickness and fewer defects on a core wire having a small diameter by extrusion forming, and that is capable of obtaining a formed article having a small haze value and having excellent 150°C abrasion resistance, oxygen low permeability, chemical solution low permeability, high-temperature rigidity, high-temperature tensile creep properties, and heat distortion resistance after immersion in a chemical solution.

MEANS FOR SOLVING THE PROBLEM

According to the present disclosure, there is provided a copolymer containing tetrafluoroethylene unit and perfluoro(propyl vinyl ether) unit, wherein the copolymer has a content of perfluoro(propyl vinyl ether) unit of 2.14 to 3.00 mol% with respect to the whole of the monomer units, a melt flow rate at 372°C of 33.0 to 49.9 g/10 min, and the number of functional groups of 50 or less per $10^6$ main-chain carbon atoms.

According to the present disclosure, an injection molded article comprising the above copolymer is further provided.

According to the present disclosure, a coated electric wire having a coating layer comprising the copolymer is further provided.

According to the present disclosure, a formed article comprising the above copolymer, wherein the formed article is a joint, a flowmeter body, or an electric wire coating is further provided.

EFFECTS OF INVENTION

According to the present disclosure, there can be provided a copolymer that is capable of obtaining an injection molded article having excellent surface smoothness by injection molding in a high productivity, that is capable of easily forming a thin coating layer having a uniform thickness and fewer defects on a core wire having a small diameter by extrusion forming, and that is capable of obtaining a formed article having a small haze value and having excellent 150°C abrasion resistance, oxygen low permeability, chemical solution low permeability, high-temperature rigidity, high-temperature tensile creep properties, and heat distortion resistance after immersion in a chemical solution.

DESCRIPTION OF EMBODIMENTS

Hereinafter, specific embodiments of the present disclosure will be described in detail, but the present disclosure is not limited to the following embodiments.

A copolymer of the present disclosure contains tetrafluoroethylene (TFE) unit and perfluoro(propyl vinyl ether) (PPVE) unit.

Patent Document 1 describes that the use of a melt-fabricable perfluoropolymer to form the jacket of a USB cable. However, when the melt-fabricable perfluoropolymer described in Patent Document 1 is used to form a formed article such as a flowmeter member for measuring the flow rate of a chemical solution or a piping member for transferring a chemical solution, it cannot be said that the transparency, the high-temperature abrasion resistance, and the heat distortion resistance after immersion in a chemical solution of the obtained formed article are sufficient, and there is room for improvement.

By suitably regulating the content of PPVE unit, the melt flow rate (MFR), and the number of functional groups of the copolymer containing TFE unit and PPVE unit, and using of such a copolymer, a thin coating layer having a uniform thickness and fewer defects can be easily formed on a core wire having a small diameter. Moreover, by using such a copolymer, an injection-molded article having excellent surface smoothness can be obtained in a high productivity.

In addition, it has been also found that the copolymer, the content of the PPVE unit, the melt flow rate (MFR), and the number of functional groups of which are suitably regulated, provides a formed article having a small haze value and having excellent 150°C abrasion resistance, oxygen low permeability, chemical solution low permeability, high-temperature rigidity, high-temperature tensile creep properties, and heat distortion resistance after immersion in a chemical solution. Accordingly, by using such a copolymer as a material for forming formed articles such as a flowmeter member for measuring the flow rate of a chemical solution and a piping member for transferring a chemical solution, a flowmeter capable of reliably measuring the flow rate and a piping member that enables the state of transferring the chemical solution to be checked can be obtained. Moreover, since these formed articles have excellent 150°C abrasion resistance, oxygen low permeability, chemical solution low permeability, high-temperature rigidity, high-temperature tensile creep properties, and heat distortion resistance after immersion in a chemical solution, these formed articles hardly deform even when being in contact with a high-temperature chemical solution, hardly make oxygen and chemical solutions such as electrolytic solutions and organic solvents to permeate, and thus hardly change the quality of chemical solutions.

The copolymer of the present disclosure is a melt-fabricable fluororesin. Being melt-fabricable means that a polymer can be melted and processed by using a conventional processing device such as an extruder or an injection molding machine.

The content of the PPVE unit of the copolymer is, with respect to the whole of the monomer units, 2.14 to 3.00 mol%, preferably 2.17 mol% or higher, more preferably 2.20 mol% or higher, still more preferably 2.23 mol% or higher, especially preferably 2.26 mol% or higher, and most preferably 2.30 mol% or higher, and is preferably 2.90 mol% or lower, more preferably 2.85 mol% or lower, still more preferably 2.80 mol% or lower, and especially preferably 2.75 mol% or lower. Due to that the content of the PPVE unit of the copolymer is in the above range, a formed article can be obtained that has a small haze value and that has excellent 150°C abrasion resistance, oxygen low permeability, chemical solution low permeability, high-temperature rigidity, high-temperature tensile creep properties, and heat distortion resistance after immersion in a chemical solution. When the content of the PPVE unit of the copolymer is excessively small, the obtained formed article has an increased haze value and poor 150°C abrasion resistance and heat distortion resistance after immersion in a chemical solution.

The content of the TFE unit of the copolymer is, with respect to the whole of the monomer units, preferably 97.00 to 97.86 mol%, more preferably 97.10 mol% or higher, still more preferably 97.15 mol% or higher, especially preferably 97.20 mol% or higher, and most preferably 97.25 mol% or higher, and more preferably 97.83 mol% or lower, still more preferably 97.80 mol% or lower, further still more preferably 97.77 mol% or lower, especially preferably 97.74 mol% or lower, and most preferably 97.70 mol% or lower. Due to that the content of the TFE unit of the copolymer is in the above range, a formed article can be obtained that has a smaller haze value and that has better 150°C abrasion resistance, oxygen low permeability, chemical solution low permeability, high-temperature rigidity, high-temperature tensile creep properties, and heat distortion resistance after immersion in a chemical solution. When the content of the TFE unit of the copolymer is excessively large, the obtained formed article possibly has an increased haze value and poor 150°C abrasion resistance and heat distortion resistance after immersion in a chemical solution.

In the present disclosure, the content of each monomer unit in the copolymer is measured by a $^{19}$F-NMR method.

The copolymer can also contain a monomer unit derived from a monomer copolymerizable with TFE and PPVE. In this case, the content of the monomer unit copolymerizable with TFE and PPVE is, with respect to the whole of the monomer units of the copolymer, preferably 0 to 0.86 mol%, more preferably 0.01 to 0.30 mol%, and still more preferably 0.05 to 0.20 mol%.

The monomers copolymerizable with TFE and PPVE may include hexafluoropropylene (HFP), vinyl monomers represented by $CZ^1Z^2=CZ^3(CF_2)_nZ^4$ wherein $Z^1$, $Z^2$ and $Z^3$ are identical or different, and represent H or F; $Z^4$ represents H, F or Cl; and n represents an integer of 2 to 10, perfluoro(alkyl vinyl ether) [PAVE] represented by $CF_2=CF-ORf^1$ wherein $Rf^1$ is a perfluoroalkyl group having 1 to 8 carbon atoms (excluding PPVE), and alkyl perfluorovinyl ether derivatives represented by $CF_2=CF-OCH_2-Rf^1$ wherein $Rf^1$ represents a perfluoroalkyl group having 1 to 5 carbon atoms. Among these, HFP is preferred.

The copolymer is preferably at least one selected from the group consisting of a copolymer consisting only of the TFE unit and the PPVE unit, and TFE/HFP/PPVE copolymer, and more preferably a copolymer consisting only of the TFE unit and the PPVE unit.

The melt flow rate (MFR) of the copolymer is 33.0 to 49.9 g/10 min. The MFR of the copolymer is preferably 33.1 g/10 min or higher, more preferably 34.0 g/10 min or higher, still more preferably 34.1 g/10 min or higher, especially preferably 35.0 g/10 min or higher, and most preferably 36.0 g/10 min or higher, and is preferably 49.0 g/10 min or lower, and more preferably 48.0 g/10 min or lower. Due to that the MFR of the copolymer is in the above range, a formed article can be obtained that has a small haze value and that has excellent 150°C abrasion resistance, oxygen low permeability, chemical solution low permeability, high-temperature rigidity, high-temperature tensile creep properties, and heat distortion resistance after immersion in a chemical solution.

Moreover, due to that the MFR of the copolymer is in the above range, by using such a copolymer, an injection molded article can be obtained that has excellent surface smoothness in a high productivity and a thin coating layer having a uniform thickness and fewer defects can be easily formed on a core wire having a small diameter. Also, due to that the MFR of the copolymer is in the above range, the number of sparks generated in a coating layer obtained by using such a copolymer can be reduced. Further, by using the copolymer of the present disclosure, small injection molded articles having a thin-wall thickness can be produced simultaneously in a large number thereof.

In the present disclosure, the MFR is a value obtained as a mass (g/10 min) of the polymer flowing out from a nozzle having an inner diameter of 2.1 mm and a length of 8 mm per 10 min at 372°C under a load of 5 kg using a melt indexer, according to ASTM D1238.

The MFR can be regulated by regulating the kind and amount of a polymerization initiator to be used in polymerization of monomers, the kind and amount of a chain transfer agent, and the like.

In the present disclosure, the number of functional groups per $10^6$ main-chain carbon atoms of the copolymer is 50 or less. The number of functional groups per $10^6$ main-chain carbon atoms of the copolymer is preferably 40 or less, more preferably 30 or less, still more preferably 20 or less, further still more preferably 15 or less, especially preferably 10 or less, and most preferably less than 6. Due to that the number of functional groups of the copolymer is in the above range, a formed article can be obtained that has excellent 150°C abrasion resistance, oxygen low permeability, chemical solution low permeability, high-temperature rigidity, high-temperature tensile creep properties, and heat distortion resistance after immersion in a chemical solution. In addition, due to that the number of functional groups of the copolymer is in the above range, a thin coating layer can be formed by extrusion forming at a high rate on a core wire having a small diameter. When the number of functional groups of the copolymer is excessive, it is difficult to obtain a formed article that has excellent oxygen low permeability, chemical solution low permeability (electrolytic solution low permeability and organic solvent low permeability), and high-temperature tensile creep properties.

For identification of the kind of the functional groups and measurement the number of the functional groups, infrared spectroscopy can be used.

The number of the functional groups is measured, specifically, by the following method. First, the copolymer is formed by cold press to prepare a film of 0.25 to 0.30 mm in thickness. The film is analyzed by Fourier transform infrared spectroscopy to obtain an infrared absorption spectrum, and a difference spectrum against a base spectrum that is completely fluorinated and has no functional groups is obtained. From an absorption peak of a specific functional group observed on this difference spectrum, the number N of functional groups per $1\times10^6$ carbon atoms in the copolymer is calculated according to the following formula (A).

$$N = I \times K/t \cdots (A)$$

I: absorbance
K: correction factor
t: thickness of film (mm)

For reference, for some functional groups, the absorption frequency, the molar absorption coefficient and the correction factor are shown in Table 1. Then, the molar absorption coefficients are those determined from FT-IR measurement data of low molecular model compounds.

[Table 1]

Table 1

| Functional Group | Absorption Frequency (cm$^{-1}$) | Molar Extinction Coefficient (l/cm/mol) | Correction Factor | Model Compound |
|---|---|---|---|---|
| -COF | 1883 | 600 | 388 | $C_7F_{15}COF$ |
| -COOH free | 1815 | 530 | 439 | $H(CF_2)_6COOH$ |
| -COOH bonded | 1779 | 530 | 439 | $H(CF_2)_6COOH$ |
| -COOCH$_3$ | 1795 | 680 | 342 | $C_7F_{15}COOCH_3$ |
| -CONH$_2$ | 3436 | 506 | 460 | $C_7H_{15}CONH_2$ |
| -CH$_2$OH$_2$, -OH | 3648 | 104 | 2236 | $C_7H_{15}CH_2OH$ |
| -CF$_2$H | 3020 | 8.8 | 26485 | $H(CF_2CF_2)_3CH_2OH$ |
| -CF=CF$_2$ | 1795 | 635 | 366 | $CF_2=CF_2$ |

Absorption frequencies of -CH$_2$CF$_2$H, -CH$_2$COF, -CH$_2$COOH, - CH$_2$COOCH$_3$ and -CH$_2$CONH$_2$ are lower by a few tens of kaysers (cm$^{-1}$) than those of -CF$_2$H, -COF, -COOH free and -COOH bonded, - COOCH$_3$ and -CONH$_2$ shown in the Table, respectively.

For example, the number of the functional group -COF is the total number of a functional group determined from an absorption peak having an absorption frequency of 1,883 cm$^{-1}$ derived from -CF$_2$COF and the number of a functional group determined from an absorption peak having an absorption frequency of 1,840 cm$^{-1}$ derived from -CH$_2$COF.

The functional groups are ones present on main chain terminals or side chain terminals of the copolymer, and ones present in the main chain or the side chains. The number of the functional groups may be the total number of -CF=CF$_2$, -CF$_2$H, -COF, -COOH, -COOCH$_3$, -CONH$_2$ and -CH$_2$OH.

The functional groups are introduced into the copolymer by, for example, a chain transfer agent or a polymerization initiator used for the production of the copolymer. For example, in the case of using an alcohol as the chain transfer agent, or a peroxide having a structure of -CH$_2$OH as the polymerization initiator, -CH$_2$OH is introduced on the main chain terminals of the copolymer. Alternatively, the functional group is introduced on the side chain terminal of the copolymer by polymerizing a monomer having the functional group.

By subjecting the copolymer having such a functional group to a fluorination treatment, a copolymer having the number of functional groups within the above range can be obtained. That is, the copolymer of the present disclosure is preferably one which is subjected to the fluorination treatment. Further, the copolymer of the present disclosure preferably has -CF$_3$ terminal groups.

The melting point of the copolymer is preferably 285 to 310°C, more preferably 290°C or higher, and still more preferably 294°C or higher, and is more preferably 303°C or lower. Due to that the melting point is in the above range, there can be obtained the copolymer giving formed articles better in mechanical strength particularly at high temperatures.

In the present disclosure, the melting point can be measured by using a differential scanning calorimeter [DSC].

The copolymer of the present disclosure preferably has a haze value of 12.0% or less, and more preferably 11.5% or less. Due to that the haze value is in the above range, when the copolymer of the present disclosure is used to obtain a formed article such as a pipe, a joint, a flowmeter body, or a bottle, it is easy to observe the inside of the formed article by visual observation, a camera or the like, and thus it is easy to check the flow rate and the residual quantity of the contents. The haze value can be lowered by regulating the content of the PPVE unit and the melt flow rate (MFR) of the copolymer. In the present disclosure, the haze value can be measured according to JIS K 7136.

The oxygen permeability coefficient of the copolymer is preferably 900 cm$^3$·mm/(m$^2$·24 h·atm) or less. Due to that the content of the PPVE unit, the melt flow rate (MFR), and the number of functional groups of the copolymer containing the TFE unit and the PPVE unit are suitably regulated, the copolymer of the present disclosure has excellent oxygen low permeability. Accordingly, due to that a formed article formed of the copolymer hardly permeates oxygen, a piping member and a flowmeter member obtained using the copolymer of the present disclosure can suitably be used to transfer a chemical solution, the oxidation of which should be avoided.

In the present disclosure, the oxygen permeability coefficient can be measured under the condition of a test temperature of 70°C and a test humidity of 0% RH. Specific measurement of the oxygen permeability coefficient can be carried out by a method described in the Examples.

The electrolytic solution permeability of the copolymer is preferably 6.6 g.cm/m$^2$ or lower. Due to that the content of the PPVE unit, the melt flow rate (MFR), and the number of functional groups of the copolymer containing the TFE unit and the PPVE unit are suitably regulated, the copolymer of the present disclosure has excellent electrolytic solution low permeability. That is, by using the copolymer of the present disclosure, a formed article that hardly makes a chemical solution such as an electrolytic solution to permeate can be obtained.

In the present disclosure, the electrolytic solution permeability can be measured under the condition of a temperature of 60°C and for 30 days. Specific measurement of the electrolytic solution permeability can be carried out by the method described in the Examples.

The methyl ethyl ketone (MEK) permeability of the copolymer is preferably 67.0 mg·cm/m$^2$·day or lower. Due to that the content of the PPVE unit, the melt flow rate (MFR), and the number of functional groups of the copolymer containing the TFE unit and the PPVE unit are suitably regulated, the copolymer of the present disclosure has excellent low MEK permeability. That is, by using the copolymer of the present disclosure, a formed article that hardly makes a chemical solution such as MEK to permeate can be obtained.

In the present disclosure, the MEK permeability can be measured under the condition of a temperature of 60°C and for 60 days. Specific measurement of the MEK permeability can be carried out by a method described in the Examples.

The copolymer of the present disclosure can be produced by a polymerization method such as suspension polymerization, solution polymerization, emulsion polymerization or bulk polymerization. The polymerization method is preferably emulsion polymerization or suspension polymerization. In these polymerization methods, conditions such as temperature and pressure, and a polymerization initiator and other additives can suitably be set depending on the formulation and the amount of the copolymer.

As the polymerization initiator, an oil-soluble radical polymerization initiator, or a water-soluble radical polymerization initiator may be used.

The oil-soluble radical polymerization initiator may be a known oil-soluble peroxide, and examples thereof typically include:

dialkyl peroxycarbonates such as di-n-propyl peroxydicarbonate, diisopropyl peroxydicarbonate, di-sec-butyl peroxydicarbonate and di-2-ethoxyethyl peroxydicarbonate;
peroxyesters such as t-butyl peroxyisobutyrate and t-butyl peroxypivalate;
dialkyl peroxides such as di-t-butyl peroxide; and
di[fluoro(or fluorochloro)acyl] peroxides.

The di[fluoro(or fluorochloro)acyl] peroxides include diacyl peroxides represented by [(RfCOO)-]$_2$ wherein Rf is a perfluoroalkyl group, an ω-hydroperfluoroalkyl group or a fluorochloroalkyl group.

Examples of the di[fluoro(or fluorochloro)acyl] peroxides include di(ω-hydro-dodecafluorohexanoyl) peroxide, di(ω-hydro-tetradecafluoroheptanoyl) peroxide, di(ω-hydro-hexadecafluorononanoyl) peroxide, di(perfluoropropionyl) peroxide, di(perfluorobutyryl) peroxide, di(perfluorovaleryl) peroxide, di(perfluorohexanoyl) peroxide, di(perfluoroheptanoyl) peroxide, di(perfluorooctanoyl) peroxide, di(perfluorononanoyl) peroxide, di(ω-chloro-hexafluorobutyryl) peroxide, di(ω-chloro-decafluorohexanoyl) peroxide, di(ω-chloro-tetradecafluorooctanoyl) peroxide, ω-hydrodo-decafluoroheptanoyl-ω-hydrohexadecafluorononanoyl peroxide, ω-chloro-hexafluorobutyryl-ω-chloro-decafluorohexanoyl peroxide, ω-hydrododecafluoroheptanoyl-perfluorobutyryl peroxide, di(dichloropentafluorobutanoyl) peroxide, di(trichlorooctafluorohexanoyl) peroxide, di(tetrachloroundecafluorooctanoyl) peroxide, di(pentachlorotetradecafluorodecanoyl) peroxide, and di(undecachlorotriacontafluorodocosanoyl) peroxide.

The water-soluble radical polymerization initiator may be a known water-soluble peroxide, and examples thereof include ammonium salts, potassium salts and sodium salts of persulfuric acid, perboric acid, perchloric acid, perphosphoric acid, percarbonic acid and the like, organic peroxides such as disuccinoyl peroxide and diglutaroyl peroxide, and t-butyl permaleate and t-butyl hydroperoxide. A reductant such as a sulfite salt may be combined with a peroxide and used, and the amount thereof to be used may be 0.1 to 20 times with respect to the peroxide.

In the polymerization, a surfactant, a chain transfer agent and a solvent may be used, which are conventionally known.

The surfactant may be a known surfactant, for example, nonionic surfactants, anionic surfactants and cationic surfactants may be used. Among these, fluorine-containing anionic surfactants are preferred, and more preferred are linear or branched fluorine-containing anionic surfactants having 4 to 20 carbon atoms, which may contain an ether bond oxygen (that is, an oxygen atom may be inserted between carbon atoms). The amount of the surfactant to be added (with respect to water in the polymerization) is preferably 50 to 5,000 ppm.

Examples of the chain transfer agent include hydrocarbons such as ethane, isopentane, n-hexane, and cyclohexane; aromatics such as toluene and xylene; ketones such as acetone; acetate esters such as ethyl acetate and butyl acetate; alcohols such as methanol and ethanol; mercaptans such as methylmercaptan; and halogenated hydrocarbons such as carbon tetrachloride, chloroform, methylene chloride and methyl chloride. The amount of the chain transfer agent to be added may vary depending on the chain transfer constant value of the compound to be used, but is usually in the range of 0.01 to 20% by mass with respect to the solvent in the polymerization.

The solvent may include water and mixed solvents of water and an alcohol.

In the suspension polymerization, in addition to water, a fluorosolvent may be used. The fluorosolvent may include hydrochlorofluoroalkanes such as $CH_3CClF_2$, $CH_3CCl_2F$, $CF_3CF_2CCl_2H$ and $CF_2ClCF_2CFHCl$; chlorofluoroalaknes such as $CF_2ClCFClCF_2CF_3$ and $CF_3CFClCFClCF_3$; hydrofluroalkanes such as $CF_3CFHCFHCF_2CF_2CF_3$, $CF_2HCF_2CF_2CF_2CF_2H$ and $CF_3CF_2CF_2CF_2CF_2CF_2H$; hydrofluoroethers such as $CH_3OC_2F_5$, $CH_3OC_3F_5CF_3CF_2CH_2OCHF_2$, $CF_3CHFCF_2OCH_3$, $CHF_2CF_2OCH_2F$, $(CF_3)_2CHCF_2OCH_3$, $CF_3CF_2CH_2OCH_2CHF_2$ and $CF_3CHFCF_2OCH_2CF_3$; and perfluoroalkanes such as perfluorocyclobutane, $CF_3CF_2CF_2CF_3$, $CF_3CF_2CF_2CF_2CF_3$ and $CF_3CF_2CF_2CF_2CF_2CF_3$, and among these, perfluoroalkanes are preferred. The amount of the fluorosolvent to be used is, from the viewpoint of suspensibility and the economic efficiency, preferably 10 to 100% by mass with respect to an aqueous medium.

The polymerization temperature is not limited, and may be 0 to 100°C. The polymerization pressure is suitably set depending on other polymerization conditions to be used such as the kind, the amount, and the vapor pressure of the solvent, and the polymerization temperature, but may usually be 0 to 9.8 MPaG.

In the case of obtaining an aqueous dispersion containing the copolymer by the polymerization reaction, the copolymer can be recovered by coagulating, washing and drying the copolymer contained in the aqueous dispersion. Then in the case of obtaining the copolymer as a slurry by the polymerization reaction, the copolymer can be recovered by taking out the slurry from a reaction container, and washing and drying the slurry. The copolymer can be recovered in a shape of powder by the drying.

The copolymer obtained by the polymerization may be formed into pellets. A method of forming into pellets is not limited, and a conventionally known method can be used. Examples thereof include methods of melt extruding the copolymer by using a single-screw extruder, a twin-screw extruder or a tandem extruder and cutting the resultant into a predetermined length to form the copolymer into pellets. The extrusion temperature in the melt extrusion needs to be varied depending on the melt viscosity and the production method of the copolymer, and is preferably the melting point of the copolymer + 20°C to the melting point of the copolymer + 140°C. A method of cutting the copolymer is not limited, and a conventionally known method can be adopted such as a strand cut method, a hot cut method, an underwater cut method, or a sheet cut method. Volatile components in the obtained pellets may be removed by heating the pellets (degassing treatment). Alternatively, the obtained pellets may be treated by bringing the pellets into contact with hot water of 30 to 200°C, steam of 100 to 200°C or hot air of 40 to 200°C.

Alternatively, the copolymer obtained by the polymerization may be subjected to fluorination treatment. The fluorination treatment can be carried out by bringing the copolymer having been subjected to no fluorination treatment into contact with a fluorine-containing compound. By the fluorination treatment, thermally unstable functional groups of the copolymer, such as -COOH, -COOCH₃, -CH₂OH, -COF, -CF=CF₂ and -CONH₂, and thermally relatively stable functional groups thereof, such as -CF₂H, can be converted to thermally very stable -CF₃. Consequently, the total number (number of functional groups) of -COOH, -COOCH₃, -CH₂OH, -COF, -CF=CF₂, - CONH₂ and -CF₂H of the copolymer can easily be controlled in the above-mentioned range.

The fluorine-containing compound is not limited, but includes fluorine radical sources generating fluorine radicals under the fluorination treatment condition. The fluorine radical sources include $F_2$ gas, $CoF_3$, $AgF_2$, $UF_6$, $OF_2$, $N_2F_2$, $CF_3OF$, and halogen fluorides (for example, $IF_5$ and $ClF_3$).

The fluorine radical source such as $F_2$ gas may be, for example, one having a concentration of 100%, but from the viewpoint of safety, the fluorine radical source is preferably mixed with an inert gas and diluted therewith to 5 to 50% by mass, and then used; and it is more preferably to be diluted to 15 to 30% by mass. The inert gas include nitrogen gas, helium gas and argon gas, but from the viewpoint of the economic efficiency, nitrogen gas is preferred.

The condition of the fluorination treatment is not limited, and the copolymer in a melted state may be brought into contact with the fluorine-containing compound, but the fluorination treatment can be carried out usually at a temperature of not higher than the melting point of the copolymer, preferably at 20 to 240°C and more preferably at 100 to 220°C. The fluorination treatment is carried out usually for 1 to 30 hours and preferably 5 to 25 hours. The fluorination treatment is preferred which brings the copolymer having been subjected to no fluorination treatment into contact with fluorine gas ($F_2$ gas).

A composition may be obtained by mixing the copolymer of the present disclosure and as required, other components. The other components include fillers, plasticizers, processing aids, mold release agents, pigments, flame retarders, lubricants, light stabilizers, weathering stabilizers, electrically conductive agents, antistatic agents, ultraviolet absorbents, antioxidants, foaming agents, perfumes, oils, softening agents and dehydrofluorination agents.

Examples of the fillers include silica, kaolin, clay, organo clay, talc, mica, alumina, calcium carbonate, calcium terephthalate, titanium oxide, calcium phosphate, calcium fluoride, lithium fluoride, crosslinked polystyrene, potassium titanate, carbon, boron nitride, carbon nanotube, and glass fiber. The electrically conductive agents include carbon black. The plasticizers include dioctyl phthalate and pentaerythritol. The processing aids include carnauba wax, sulfone compounds, low molecular weight polyethylene and fluorine-based auxiliary agents. The dehydrofluorination agents include organic oniums and amidines.

As the above-mentioned other components, other copolymers other than the copolymer may be used. The other polymers include fluororesins other than the copolymer, fluoroelastomer, and non-fluorinated polymers.

A method of producing the composition include a method of dry mixing the copolymer and the other components, and a method of previously mixing the copolymer and the other components by a mixer and then melt kneading the mixture by a kneader, melt extruder or the like.

The copolymer of the present disclosure or the above-mentioned composition can be used as a processing aid, a forming material and the like, and is suitably used as a forming material. There can also be utilized aqueous dispersions, solutions and suspensions of the copolymer of the present disclosure, and the copolymer/solvent-based materials; and there can be used for application of coating materials, encapsulation, impregnation, and casting of films. However, since the copolymer of the present disclosure has the above-described properties, it is preferable to use the copolymer as the forming material.

Formed articles may be obtained by forming the copolymer of the present disclosure or the above composition.

A method of forming the copolymer or the composition is not limited, and includes injection molding, extrusion forming, compression molding, blow molding, transfer molding, rotomolding, and rotolining molding. As the forming method, among these, preferable are extrusion forming, compression molding, injection molding and transfer molding; more preferable are injection molding, extrusion forming and transfer molding from the viewpoint of being able to produce forming articles in a high productivity, and still more preferable is injection molding. That is, it is preferable that formed articles are extrusion formed articles, compression molded articles, injection molded articles or transfer molded articles; and from the viewpoint of being able to produce molded articles in a high productivity, being injection molded articles, extrusion formed articles or transfer molded articles is more preferable, and being injection molded articles is still more preferable. By forming the copolymer of the present disclosure by injection molding, an injection molded article having excellent surface smoothness can be obtained in a high productivity.

The formed article containing the copolymer of the present disclosure may be, for example, a nut, a bolt, a joint, a film, a bottle, a gasket, an electric wire coating, a tube, a hose, a pipe, a valve, a sheet, a seal, a packing, a tank, a roller, a container, a cock, a connector, a filter housing, a filter cage, a flowmeter, a pump, a wafer carrier, and a wafer box.

The copolymer of the present disclosure, the above composition and the above formed article can be used, for example, in the following applications.

Food packaging films, and members for liquid transfer for food production apparatuses, such as lining materials of fluid transfer lines, packings, sealing materials and sheets, used in food production processes;

chemical stoppers and packaging films for chemicals, and members for chemical solution transfer, such as lining materials of liquid transfer lines, packings, sealing materials and sheets, used in chemical production processes; inner surface lining materials of chemical solution tanks and piping of chemical plants and semiconductor factories; members for fuel transfer, such as O (square) rings, tubes, packings, valve stem materials, hoses and sealing materials, used in fuel systems and peripheral equipment of automobiles, and such as hoses and sealing materials, used in ATs of automobiles;

members used in engines and peripheral equipment of automobiles, such as flange gaskets of carburetors, shaft seals, valve stem seals, sealing materials and hoses, and other vehicular members such as brake hoses, hoses for air conditioners, hoses for radiators, and electric wire coating materials;

members for chemical transfer for semiconductor production apparatuses, such as O (square) rings, tubes, packings, valve stem materials, hoses, sealing materials, rolls, gaskets, diaphragms and joints;

members for coating and inks, such as coating rolls, hoses and tubes, for coating facilities, and containers for inks; members for food and beverage transfer, such as tubes, hoses, belts, packings and joints for food and beverage, food packaging materials, and members for glass cooking appliances; members for waste liquid transport, such as tubes and hoses for waste transport;

members for high-temperature liquid transport, such as tubes and hoses for high-temperature liquid transport; members for steam piping, such as tubes and hoses for steam piping;

corrosionproof tapes for piping, such as tapes wound on piping of decks and the like of ships;

various coating materials, such as electric wire coating materials, optical fiber coating materials, and transparent front side coating materials installed on the light incident side and back side lining materials of photoelectromotive elements of solar cells;

diaphragms and sliding members such as various types of packings of diaphragm pumps;

films for agriculture, and weathering covers for various kinds of roof materials, sidewalls and the like;

interior materials used in the building field, and coating materials for glasses such as non-flammable fireproof safety glasses; and

lining materials for laminate steel sheets used in the household electric field.

The fuel transfer members used in fuel systems of automobiles further include fuel hoses, filler hoses, and evap hoses. The above fuel transfer members can also be used as fuel transfer members for gasoline additive-containing fuels, resultant to sour gasoline, resistant to alcohols, and resultant to methyl tertiary butyl ether and amines and the like.

The above chemical stoppers and packaging films for chemicals have excellent chemical resistance to acids and the like. The above chemical solution transfer members also include corrosion-proof tapes wound on chemical plant pipes.

The above formed articles also include vehicular radiator tanks, chemical solution tanks, bellows, spacers, rollers and gasoline tanks, waste solution transport containers, high-temperature liquid transport containers and fishery and fish farming tanks.

The above formed articles further include members used for vehicular bumpers, door trims and instrument panels, food processing apparatuses, cooking devices, water- and oil-repellent glasses, illumination-related apparatuses, display boards and housings of OA devices, electrically illuminated billboards, displays, liquid crystal displays, cell phones, printed circuit boards, electric and electronic components, sundry goods, dust bins, bathtubs, unit baths, ventilating fans, illumination frames and the like.

Due to that the formed articles containing the copolymer of the present disclosure have a small haze value, have excellent 150°C abrasion resistance, oxygen low permeability, chemical solution low permeability, high-temperature rigidity, high-temperature tensile creep properties and heat distortion resistance after immersion in a chemical solution, the formed articles can suitably be utilized as a nut, a bolt, a joint, a packing, a valve, a cock, a connector, a filter housing, a filter cage, a flowmeter, a pump, or the like. Due to that the filter housing containing the copolymer of the present disclosure has an extremely small haze value, the filter housing has excellent inside-visibility, and, for example, a defoaming operation can be easily performed. Also, the formed articles can suitably be utilized as a piping member (in particular, a joint) used to transfer a chemical solution or as a flowmeter body having a flow path for a chemical solution in a flowmeter. The piping member and the flowmeter body of the present disclosure have a small haze value, have excellent heat distortion resistance after immersion in a chemical solution, and also have excellent oxygen low permeability, chemical solution low permeability, 150°C abrasion resistance, high-temperature tensile creep properties, and high-temperature rigidity. Accordingly, the piping member and the flowmeter body of the present disclosure have excellent inside-visibility and, especially in the flowmeter body, enable the float inside to be easily observed by visual observation or a camera and the like and can suitably be used in measuring the flow rate of a high-temperature chemical solution. Moreover, the piping member and the flowmeter body of the present disclosure can be produced at an extremely high injection rate even when having a thin portion, and have an attractive appearance.

Due to that the formed articles containing the copolymer of the present disclosure can be produced at an extremely high injection rate by injection molding, has excellent 150°C abrasion resistance, oxygen low permeability, chemical solution low permeability, high-temperature rigidity, high-temperature tensile creep properties and heat distortion resistance after immersion in a chemical solution, the formed articles can suitably be utilized as members to be compressed such as a gasket or a packing. The gasket or packing of the present disclosure can be inexpensively produced by injection molding, hardly deforms even when installed in a place where opening and closing are repeated highly frequently, and has excellent 150°C abrasion resistance, high-temperature tensile creep properties, oxygen low permeability, chemical solution low permeability, and crack resistance with respect to a high-temperature chemical solution. Due to that the members to be compressed of the present disclosure have excellent oxygen low permeability, the members can suitably be used as a piping member for transferring a chemical solution, the oxidation of which should be avoided.

The size and shape of the members to be compressed of the present disclosure may suitably be set according to applications, and are not limited. The shape of the members to be compressed of the present disclosure may be, for example, annular. The members to be compressed of the present disclosure may also have, in plan view, a circular shape, an elliptic shape, a corner-rounded square or the like, and may be a shape having a throughhole in the central portion thereof.

It is preferable that the members to be compressed of the present disclosure are used as members constituting non-aqueous electrolyte batteries. Due to that the members to be compressed of the present disclosure have excellent electrolytic solution low permeability, the members are especially suitable as members used in a state of contacting with a non-aqueous electrolyte in a non-aqueous electrolyte batteries. That is, the members to be compressed of the present disclosure may also ones having a liquid-contact surface with a non-aqueous electrolyte in the non-aqueous electrolyte batteries.

The non-aqueous electrolyte batteries are not limited as long as being batteries having a non-aqueous electrolyte, and examples thereof include lithium ion secondary batteries and lithium ion capacitors. Members constituting the non-aqueous electrolyte batteries include sealing members and insulating members.

For the non-aqueous electrolyte, one or two or more of well-known solvents can be used such as propylene carbonate, ethylene carbonate, butylene carbonate, $\gamma$-butyllactone, 1,2-dimethoxyethane, 1,2-diethoxyethane, dimethyl carbonate, diethyl carbonate and ethyl methyl carbonate. The non-aqueous electrolyte battery may further have an electrolyte. The electrolyte is not limited, but may be $LiClO_4$, $LiAsF_6$, $LiPF_6$, $LiBF_4$, LiCl, LiBr, $CH_3SO_3Li$, $CF_3SO_3Li$, cesium carbonate and the like.

The members to be compressed of the present disclosure can suitably be utilized, for example, as sealing members such as sealing gaskets or sealing packings, or insulating members such as insulating gaskets or insulating packings. The sealing members are members to be used for preventing leakage of a liquid or a gas, or penetration of a liquid or a gas from the outside. The insulating members are members to be used for insulating electricity. The members to be compressed of the present disclosure may also be members to be used for the purpose of both of sealing and insulation.

The members to be compressed of the present disclosure, due to containing the above copolymer, have the excellent insulating property. Therefore, in the case of using the members to be compressed of the present disclosure as insulating members, the members firmly adhere to two or more electrically conductive members and prevent short circuit over a long term.

By forming the copolymer of the present disclosure by extrusion forming, a thin coating layer can be formed on a core wire having a small diameter at a high take-over speed without discontinuity of the coating even when the diameter of the core wire is small, also a coating layer having excellent electric property can be formed, the copolymer of the present disclosure can be utilized as a material for forming an electric wire coating. Accordingly, a coated electric wire provided with a coating layer containing the copolymer of the present disclosure also has excellent electric property because the coated electric wire barely has defects that causes sparks even when the diameter of the core wire is small and the coating layer is thin.

The coated electric wire has a core wire, and the coating layer installed on the periphery of the core wire and containing the copolymer of the present disclosure. For example, an extrusion formed article made by melt extruding the copolymer of the present disclosure on a core wire can be made into the coating layer. The coated electric wires are suitable to LAN cables (Ethernet cables), high-frequency transmission cables, flat cables, heat-resistant cables and the like, and among these, suitable to transmission cables such as LAN cables (Ethernet cables) and high-frequency transmission cables.

As a material for the core wire, for example, a metal conductor material such as copper or aluminum can be used. The core wire is preferably one having a diameter of 0.02 to 3 mm. The diameter of the core wire is more preferably 0.04 mm or larger, still more preferably 0.05 mm or larger and especially preferably 0.1 mm or larger. The diameter of the core wire is more preferably 2 mm or smaller.

With regard to specific examples of the core wire, for example, AWG (American Wire Gauge)-46 (solid copper wire of 40 $\mu$m in diameter), AWG-26 (solid copper wire of 404 $\mu$m in diameter), AWG-24 (solid copper wire of 510 $\mu$m in diameter), and AWG-22 (solid copper wire of 635 $\mu$m in diameter) may be used.

The coating layer is preferably one having a thickness of 0.1 to 3.0 mm. It is also preferable that the thickness of the coating layer is 2.0 mm or smaller.

The high-frequency transmission cables include coaxial cables. The coaxial cables generally have a structure configured by laminating an inner conductor, an insulating coating layer, an outer conductor layer and a protective coating layer in order from the core part to the peripheral part. A formed article containing the copolymer of the present disclosure can suitably be utilized as the insulating coating layer containing the copolymer. The thickness of each layer in the above structure is not limited, and is usually: the diameter of the inner conductor is approximately 0.1 to 3 mm; the thickness of the insulating coating layer is approximately 0.3 to 3 mm; the thickness of the outer conductor layer is approximately 0.5 to 10 mm; and the thickness of the protective coating layer is approximately 0.5 to 2 mm.

Alternatively, the coating layer may be one containing cells, and is preferably one in which cells are homogeneously distributed.

The average cell size of the cells is not limited, but is, for example, preferably 60 $\mu$m or smaller, more preferably 45 $\mu$m or smaller, still more preferably 35 $\mu$m or smaller, further still more preferably 30 $\mu$m or smaller, especially preferably 25 $\mu$m or smaller and further especially preferably 23 $\mu$m or smaller. Then, the average cell size is preferably 0.1 $\mu$m or larger and more preferably 1 $\mu$m or larger. The average cell size can be determined by taking an electron microscopic image of an electric wire cross section, calculating the diameter of each cell by image processing and averaging the diameters.

The foaming ratio of the coating layer may be 20% or higher, and is more preferably 30% or higher, still more preferably 33% or higher and further still more preferably 35% or higher. The upper limit is not limited, but is, for example, 80%. The upper limit of the foaming ratio may be 60%. The foaming ratio is a value determined as ((the specific gravity of an electric wire coating material - the specific gravity of the coating layer)/(the specific gravity of the electric wire coating material) $\times$ 100. The foaming ratio can suitably be regulated according to applications, for example, by regulation of the amount of a gas, described later, to be injected in an extruder, or by selection of the kind of a gas dissolving.

Alternatively, the coated electric wire may have another layer between the core wire and the coating layer, and may further have another layer (outer layer) on the periphery of the coating layer. In the case where the coating layer contains cells, the electric wire of the present disclosure may be of a two-layer structure (skin-foam) in which a non-foaming layer is inserted between the core wire and the coating layer, a two-layer structure (foam-skin) in which a non-foaming layer is coated as the outer layer, or a three-layer structure (skin-foam-skin) in which a non-foaming layer is coated as the outer layer of the skin-foam structure. The non-foaming layer is not limited, and may be a resin layer composed of a resin, such as a TFE/HFP-based copolymer, a TFE/PAVE copolymer, a TFE/ethylene-based copolymer, a vinylidene fluoride-based polymer, a polyolefin resin such as polyethylene [PE], or polyvinyl chloride [PVC].

The coated electric wire can be produced, for example, by using an extruder, heating the copolymer, extruding the copolymer in a molten state on the core wire to thereby form the coating layer.

In formation of a coating layer, by heating the copolymer and introducing a gas in the copolymer in a molten state, the coating layer containing cells can be formed. As the gas, for example, a gas such as chlorodifluoromethane, nitrogen or carbon dioxide, or a mixture thereof can be used. The gas may be introduced as a pressurized gas in the heated copolymer, or may be generated by mingling a chemical foaming agent in the copolymer. The gas dissolves in the copolymer in a molten state.

The copolymer of the present disclosure can suitably be utilized as a material for products for high-frequency signal transmission.

The products for high-frequency signal transmission are not limited as long as being products to be used for transmission of high-frequency signals, and include (1) formed boards such as insulating boards for high-frequency circuits, insulating materials for connection parts and printed circuit boards, (2) formed articles such as bases of high-frequency vacuum tubes and antenna covers, and (3) coated electric wires such as coaxial cables and LAN cables. The products for high-frequency signal transmission can suitably be used in devices utilizing microwaves, particularly microwaves of 3 to 30 GHz, in satellite communication devices, cell phone base stations, and the like.

In the products for high-frequency signal transmission, the copolymer of the present disclosure can suitably be used as an insulator in that the dielectric loss tangent is low.

As the (1) formed boards, printed wiring boards are preferable in that the good electric property is provided. The printed wiring boards are not limited, but examples thereof include printed wiring boards of electronic circuits for cell phones, various computers, communication devices and the like. As the (2) formed articles, antenna covers are preferable in that the low dielectric loss is low.

So far, embodiments have been described, but it is to be understood that various changes and modifications of patterns and details may be made without departing from the subject matter and the scope of the claims.

EXAMPLES

The embodiments of the present disclosure will be described by Examples as follows, but the present disclosure is not limited only to these Examples.

Each numerical value in Examples was measured by the following methods.

(Content of a monomer unit)

The content of each monomer unit was measured by an NMR analyzer (for example, manufactured by Bruker BioSpin GmbH, AVANCE 300, high-temperature probe).

(Melt flow rate (MFR))

The polymer was made to flow out from a nozzle having an inner diameter of 2.1 mm and a length of 8 mm at 372°C under a load of 5 kg by using a Melt Indexer G-01 (manufactured by Toyo Seiki Seisaku-sho, Ltd.) according to ASTM D1238, and the mass (g/10 min) of the polymer flowing out per 10 min was determined.

(Number of functional groups)

Pellets of the copolymer was formed by cold press into a film of 0.25 to 0.30 mm in thickness. The film was 40 times scanned and analyzed by a Fourier transform infrared spectrometer [FT-IR (Spectrum One, manufactured by PerkinElmer, Inc.)] to obtain an infrared absorption spectrum, and a difference spectrum against a base spectrum that is completely fluorinated and has no functional groups is obtained. From an absorption peak of a specific functional group observed on this difference spectrum, the number N of the functional group per $1 \times 10^6$ carbon atoms in the sample was calculated according to the following formula (A).

$$N = I \times K/t \quad \cdots \quad (A)$$

I: absorbance
K: correction factor
t: thickness of film (mm)

For reference, the absorption frequency, the molar absorption coefficient and the correction factor for the functional groups in the present disclosure are shown in Table 2. The molar absorption coefficients are those determined from FT-IR measurement data of low molecular model compounds.

[Table 2]

Table 2

| Functional Group | Absorption Frequency (cm$^{-1}$) | Molar Extinction Coefficient (l/cm/mol) | Correction Factor | Model Compound |
|---|---|---|---|---|
| -COF | 1883 | 600 | 388 | $C_7F_{15}COF$ |
| -COOH free | 1815 | 530 | 439 | $H(CF_2)_6COOH$ |
| -COOH bonded | 1779 | 530 | 439 | $H(CF_2)_6COOH$ |
| -COOCH$_3$ | 1795 | 680 | 342 | $C_7F_{15}COOCH_3$ |
| -CONH$_2$ | 3436 | 506 | 460 | $C_7H_{15}CONH_2$ |
| -CH$_2$OH$_2$, -OH | 3648 | 104 | 2236 | $C_7H_{15}CH_2OH$ |
| -CF$_2$H | 3020 | 8.8 | 26485 | $H(CF_2CF_2)_3CH_2OH$ |
| -CF=CF$_2$ | 1795 | 635 | 366 | $CF_2=CF_2$ |

(Melting point)

The polymer was heated, as a first temperature raising step, at a temperature-increasing rate of 10°C/min from 200°C to 350°C, then cooled at a cooling rate of 10°C/min from 350°C to 200°C, and then again heated, as second temperature raising step, at a temperature-increasing rate of 10°C/min from 200°C to 350°C by using a differential scanning calorimeter (trade name: X-DSC7000, manufactured by Hitachi High-Tech Science Corporation); and the melting point was determined from a melting curve peak observed in the second temperature raising step.

Comparative Example 1

51.8 L of pure water was charged in a 174 L-volume autoclave; nitrogen replacement was sufficiently carried out; thereafter, 40.9 kg of perfluorocyclobutane, 2.56 kg of perfluoro(propyl vinyl ether) (PPVE), and 2.29 kg of methanol were charged; and the temperature in the system was held at 35°C and the stirring speed was held at 200 rpm. Then, tetrafluoroethylene (TFE) was introduced under a pressure up to 0.64 MPa, and thereafter 0.103 kg of a 50% methanol solution of di-n-propyl peroxydicarbonate was charged to initiate polymerization. Since the pressure in the system decreased along with the progress of the polymerization, TFE was continuously supplied to make the pressure constant, and 0.055 kg of PPVE was additionally charged for every 1 kg of TFE supplied. The polymerization was finished at the time when the amount of TFE additionally charged reached 40.9 kg. Unreacted TFE was released to return the pressure in the autoclave to the atmospheric pressure, and thereafter, an obtained reaction product was washed with water and dried to thereby obtain 43.1 kg of a powder.

The obtained powder was melt extruded at 360°C by a screw extruder (trade name: PCM46, manufactured by Ikegai Corp) to thereby obtain pellets of a TFE/PPVE copolymer. The PPVE content of the obtained pellets was measured by the method described above.

The obtained pellets were put in a vacuum vibration-type reactor VVD-30 (manufactured by OKAWARA MFG. CO., LTD.), and heated to 210°C. After vacuumizing, $F_2$ gas diluted to 20% by volume with $N_2$ gas was introduced to the atmospheric pressure. 0.5 hour after the $F_2$ gas introduction, vacuumizing was once carried out and $F_2$ gas was again introduced. Further, 0.5 hour thereafter, vacuumizing was again carried out and $F_2$ gas was again introduced. Thereafter, while the above operation of the $F_2$ gas introduction and the vacuumizing was carried out once every 1 hour, the reaction was carried out at a temperature of 210°C for 10 hours. After the reaction was finished, the reactor interior was replaced sufficiently by $N_2$ gas to finish the fluorination reaction. By using the fluorinated pellets, the above physical properties were measured by the methods described above.

Comparative Example 2

Fluorinated pellets were obtained as in Comparative Example 1, except for changing the charged amount of PPVE to 2.75 kg, changing the charged amount of methanol to 3.02 kg, adding 0.058 kg of PPVE for every 1 kg of TFE supplied, changing the heating temperature of the vacuum vibration-type reactor to 170°C, and changing the reaction condition to 170°C and 5 hours to thereby obtain 43.3 kg of a dry powder.

Comparative Example 3

Fluorinated pellets were obtained as in Comparative Example 1, except for changing the charged amount of PPVE to 3.86 kg, changing the charged amount of methanol to 2.49 kg, changing the charged amount of the 50% methanol solution of di-n-propyl peroxydicarbonate to 0.051 kg, and adding 0.078 kg of PPVE for every 1 kg of TFE supplied to thereby obtain 44.1 kg of a dry powder.

Comparative Example 4

Non-fluorinated pellets were obtained as in Comparative Example 1, except for changing the charged amount of PPVE to 3.66 kg, changing the charged amount of methanol to 4.78 kg, changing the charged amount of the 50% methanol solution of di-n-propyl peroxydicarbonate to 0.051 kg, and adding 0.074 kg of PPVE for every 1 kg of TFE supplied to thereby obtain 43.9 kg of a dry powder.

Comparative Example 5

Fluorinated pellets were obtained as in Comparative Example 1, except for changing the charge amount of PPVE to 3.13 kg, changing the charge amount of methanol to 1.80 kg, and adding 0.065 kg of PPVE for every 1 kg of TFE supplied to thereby obtain 43.6 kg of a dry powder.

Example 1

Fluorinated pellets were obtained as in Comparative Example 1, except for changing the charged amount of PPVE to 2.94 kg, changing the charged amount of methanol to 4.91 kg, changing the charged amount of the 50% methanol solution of di-n-propyl peroxydicarbonate to 0.051 kg, and adding 0.062 kg of PPVE for every 1 kg of TFE supplied to thereby obtain 43.4 kg of a dry powder.

Example 2

Fluorinated pellets were obtained as in Comparative Example 1, except for changing the charged amount of PPVE to 3.21 kg, changing the charged amount of methanol to 4.46 kg, changing the charged amount of the 50% methanol solution of di-n-propyl peroxydicarbonate to 0.051 kg, and adding 0.066 kg of PPVE for every 1 kg of TFE supplied to thereby obtain 43.6 kg of a dry powder.

Example 3

Fluorinated pellets were obtained as in Comparative Example 1, except for changing the charged amount of PPVE to 3.47 kg, changing the charged amount of methanol to 4.30 kg, changing the charged amount of the 50% methanol solution of di-n-propyl peroxydicarbonate to 0.051 kg, and adding 0.071 kg of PPVE for every 1 kg of TFE supplied to thereby obtain 43.8 kg of a dry powder.

Example 4

Fluorinated pellets were obtained as in Comparative Example 1, except for changing the charged amount of PPVE to 3.73 kg, changing the charged amount of methanol to 4.32 kg, changing the charged amount of the 50% methanol solution of di-n-propyl peroxydicarbonate to 0.051 kg, adding 0.075 kg of PPVE for every 1 kg of TFE supplied, changing the heating temperature of the vacuum vibration-type reactor to 180°C, and carrying out the reaction at 180°C for 10 hours to thereby obtain 44.0 kg of a dry powder.

By using the pellets obtained in Examples and Comparative Examples, various physical properties were measured by the methods described above. The results are shown in Table 3.

[Table 3]

### Table 3

| | PPVE content (mol%) | MFR (g/10 min) | Number of functional groups (groups/C10$^6$) | Melting point (°C) |
|---|---|---|---|---|
| Comparative Example 1 | 2.02 | 42.0 | <6 | 302 |
| Comparative Example 2 | 2.14 | 61.0 | 28 | 302 |
| Comparative Example 3 | 2.83 | 31.0 | <6 | 295 |
| Comparative Example 4 | 2.71 | 47.0 | 341 | 297 |
| Comparative Example 5 | 2.38 | 55.0 | <6 | 302 |
| Example 1 | 2.26 | 34.0 | <6 | 302 |
| Example 2 | 2.43 | 36.0 | <6 | 301 |
| Example 3 | 2.59 | 40.0 | <6 | 299 |
| Example 4 | 2.75 | 48.0 | 15 | 296 |

The description "<6" in Table 3 means that the number of functional groups is less than 6.
Then, by using the obtained pellets, the following properties were evaluated. The results are shown in Table 4.

(Haze value)

By using the pellets and a heat press molding machine, a sheet of approximately 1.0 mm in thickness was prepared. The sheet was immersed in a quartz cell filled with pure water, and the haze value was measured according to JIS K 7136 using a haze meter (trade name: NDH 7000SP, manufactured by NIPPON DENSHOKU INDUSTRIES CO, LTD.).

(Abrasion test)

By using the pellets and a heat press molding machine, a sheet-shape test piece of approximately 0.2 mm in thickness was prepared, and a test piece of 10 cm × 10 cm was cut out therefrom. The prepared test piece was fixed to a test bench of a Taber abrasion tester (No. 101 Taber type abrasion tester with an option, manufactured by YASUDA SEIKI SEISAKUSHO, LTD.), and the abrasion test was carried out using the Taber abrasion tester under the condition of a test piece surface temperature of 150°C, a load of 500 g, an abrasion wheel CS-10 (rotationally polished in 20 rotations with an abrasive paper #240), and a rotation rate of 60 rpm. The weight of the test piece after 1,000 rotations was measured, and the same test piece was further subjected to the test of 5,000 rotations, and then the weight of the test piece was measured. The abrasion loss was determined by the following formula:

$$\text{Abrasion loss (mg)} = M1 - M2$$

M1: the weight of the test piece after the 1,000 rotations (mg)
M2: the weight of the test piece after 5,000 rotations (mg)

(Oxygen permeability coefficient)

By using the pellets and a heat press molding machine, a sheet-shape test piece of approximately 0.1 mm in thickness was prepared. Using the resulting test piece, oxygen permeability was measured with a differential pressure type gas permeation meter (L100-5000 gas permeability meter, manufactured by Systech Illinois) according to the method described in JIS K7126-1:2006. The oxygen permeability value at a permeation area of 50.24 cm$^2$ at a test temperature of 70°C at a test humidity of 0% RH was obtained. The obtained oxygen permeability and the test piece thickness were used to calculate the oxygen permeability coefficient from the following equation.

Oxygen permeability coefficient (cm$^3$·mm/(m$^2$·24 h·atm)) = GTR × d

GTR: oxygen permeability (cm$^3$/(m$^2$·24 h·atm))
d: test piece thickness (mm)

(Electrolytic solution permeability)

By using the pellets and a heat press molding machine, a sheet-shape test piece of approximately 0.2 mm in thickness was prepared. 10 g of dimethyl carbonate (DMC) was put in a test cup (permeation area: 12.56 cm$^2$), and the test cup was covered with the sheet-shape test piece; and a PTFE gasket was pinched and fastened to hermetically close the test cup. The sheet-shape test piece was brought into contact with the DMC, and held at a temperature of 60°C for 30 days, and thereafter, the test cup was taken out and allowed to stand at room temperature for 1 hour; thereafter, the amount of the mass lost was measured. The DMC permeability (g·cm/m$^2$) was determined by the following formula.

Electrolytic solution permeability (g·cm/m$^2$) = the amount of the mass lost (g) × the thickness of the sheet-shape test piece (cm) / the permeation area (m$^2$)

(Methyl ethyl ketone (MEK) permeability)

By using the pellets and a heat press molding machine, a sheet-shape test piece of approximately 0.1 mm in thickness was prepared. 10 g of MEK was put in a test cup (permeation area: 12.56 cm$^2$), and the test cup was covered with the sheet-shape test piece; and a PTFE gasket was pinched and fastened to hermetically close the test cup. The sheet-shape test piece was brought into contact with MEK, and held at a temperature of 60°C for 60 days, thereafter the test cup was taken out and allowed to stand at room temperature for 1 hours, and then the amount of the mass lost was measured. MEK permeability (mg·cm/m$^2$·day) was determined by the following formula:

MEK permeability (mg·cm/m$^2$·day) = [the amount of the mass lost (mg) × the thickness of the sheet-shape test piece (cm)] / [the permeation area (m$^2$)·number of days (day)]

(Rate of deflection at 95°C under load)

By using the pellets and a heat press molding machine, a sheet-shape test piece of approximately 3 mm in thickness, and a test piece of 80 × 10 mm was cut out therefrom and heated in an electric furnace at 100°C for 20 hours. Except that the obtained test piece was used, a test was carried out according to the method described in JIS K-K 7191-1 with a heat distortion tester (manufactured by YASUDA SEIKI SEISAKUSHO, LTD.) under conditions of a test temperature of 30 to 150°C, a temperature-increasing rate of 120°C/hour, a bending stress of 1.8 MPa, and a flatwise method. The rate of deflection under load was determined by the following formula. A sheet, the rate of deflection at 95°C under load of which is small, has excellent high-temperature rigidity.

```
Rate of deflection under load (%) = a2 / a1 × 100
```

a1: test piece thickness before the test (mm)
a2: amount of deflection at 95°C (mm)

(Tensile creep test)

Tensile creep strain was measured using TMA-7100 manufactured by Hitachi High-Tech Science Corporation. By using the pellets and a heat press molding machine, a sheet of approximately 0.1 mm in thickness was prepared, and a sample of 2 mm in width and 22 mm in length was prepared from the sheet. The sample was attached to the measurement jigs, with the distance between the jigs being 10 mm. A load was applied to the sample such that the cross-sectional load was 2.41 N/mm$^2$, the sample was allowed to stand at 240°C, the displacement (mm) of the length of the sample from 90 minutes after the beginning of the test to 300 minutes after the beginning of the test was measured, and the ratio of the displacement (mm) of the length to the initial sample length (10 mm) (tensile creep strain (%)) was calculated. A sheet, the tensile creep strain (%) of which measured under the condition of a temperature of 240°C and for 300 minutes is small, is hardly elongated even when a tensile load is applied in an extremely high-temperature environment, and has excellent high temperature tensile creep properties.

(Chemical solution immersion crack test (heat distortion resistance after immersion in electrolytic solution))

A sheet of approximately 2 mm in thickness was prepared by using the pellets and a heat press molding machine. The obtained sheet was punched out by using a rectangular dumbbell of 13.5 mm × 38 mm to obtain three test pieces. A notch was formed in the middle of a long side of the each obtained test piece according to ASTM D1693 by a blade of 19 mm × 0.45 mm. Three notched test pieces and 25 g of 3% by weight hydrogen peroxide solution were put in a 100 mL polypropylene bottle, and heated in an electric furnace at 100°C for 20 hours, and thereafter the notched test pieces were taken out. Then, the obtained three notched test pieces were mounted on a stress crack test jig according to ASTM D1693, and heated in an electric furnace at 150°C for 24 hours; thereafter, the notches and their vicinities were visually observed and the number of cracks was counted. A sheet that does not crack has excellent heat distortion resistance even after immersion in an electrolytic solution.

Good: the number of cracks was 0
Poor: the number of cracks was 1 or more

(Surface smoothness)

The copolymer was injection molded by using an injection molding machine (SE50EV-A, manufactured by Sumitomo Heavy Industries, Ltd.) set at a cylinder temperature of 390°C, a metal mold temperature of 190°C, and an injection speed of 130 mm/s. The metal mold used was a metal mold (four cavities of 15 mm × 15 mm × 0.6 mmt) Cr-plated on HPM38. The surface of the obtained injection molded article was visually observed and the surface smoothness was evaluated according to the following criteria.

Excellent: the surface was smooth
Good: roughness was observed only on a surface of the portion positioned in the vicinity of the gate of the metal mold of no more than one formed article per four formed articles
Fair: roughness was observed only on a surface of the portion positioned in the vicinity of the gate of the metal mold of two or more formed articles per four formed articles
Poor: roughness was observed on the most portion of the surface

(Electric wire coating property)

Extrusion coating in the following coating thickness was carried out on a silver-plated conductor composed of 19 twisted wires each having 0.05 mm with pellets by a 30-mm$\varphi$ electric wire coating forming machine (manufactured by Tanabe Plastics Machinery Co., Ltd.) to thereby obtain a coated electric wire.
The extrusion conditions for the electric wire coating were as follows.

a) Core conductor: conductor diameter: approximately 0.25 mm (19 × 0.05 mm twisted)
b) Coating thickness: 0.20 mm
c) Coated electric wire diameter: 0.65 mm
d) Electric wire take-over speed: 250 m/min
e) Extrusion condition:

· Cylinder screw diameter = 30 mm, a single screw extruder of L/D = 24
·

Die (inner diameter)/tip (outer diameter) = 9.2 mm/4.0 mm

Set temperature of extruder: barrel section C-1 (330°C), barrel section C-2 (360°C), barrel section C-3 (375°C), head section H (390°C), die section D-1 (405°C), die section D-2 (395°C). Set temperature for preheating core wire: 80°C

(2-1) Presence/absence of coating discontinuity

Electric wire coating forming was continuously carried out; and the case where coating discontinuity occurred one or more times in 1 hour was determined as poor (Poor) in continuous forming, and the case where no coating discontinuity occurred was determined as fair (Good) in continuous forming.

(2-2) Number of sparks

A spark tester (DENSOK HIGH FREQ SPARK TESTER) was installed online on an electric wire coating line, and the presence/absence of defects of the electric wire coating was evaluated at a voltage of 1,500 V. The case where no spark was generated in 1-hour continuous forming was determined as passing (Good), and the case where a spark was detected therein was determined as rejected (Poor).

(2-3) Breadth of variation of outer diameter

The outer diameter was continuously measured for 1 hour using a diameter measuring head (ODAC 18XY manufactured by Zumbach), the detected values were rounded off to the third decimal place, the largest minimum value when being ±0.01 of the target outer diameter 0.65 mm was denoted as ±0.01 mm, ±0.02 when being ±0.02 mm, ±0.03 when being ±0.03 mm, and N/A when coating discontinuity occurred.

(Dielectric loss tangent)

By melt forming the pellets, a cylindrical test piece of 2 mm in diameter was prepared. The prepared test piece was set in a cavity resonator for 6 GHz, manufactured by Kanto Electronic Application and Development Inc., and the dielectric loss tangent was measured by a network analyzer, manufactured by Agilent Technologies Inc. By analyzing the measurement result by analysis software "CPMA", manufactured by Kanto Electronic Application and Development Inc., on PC connected to the network analyzer, the dielectric loss tangent (tanδ) at 20°C at 6 GHz was determined.

[Table 4]

**Table 4**

| | Haze value (%) | 150°C Abrasion loss (mg) | Oxygen permeability coefficient cm³·mm/(m²·24 h·atm) | Electrolytic solution permeability (g·cm/m²) | MEK permeability (mg·cm/m²·day) | Rate of deflection at 95°C under load (%) | 240°C Tensile creep strain (%) | Chemical immersion crack test | Surface smoothness | Electric wire coating property | | | Dielectric tangent |
| | | | | | | | | | | Coating discontinuity | Spark evaluation | Breadth of variation of outer diameter (mm) | |
|---|---|---|---|---|---|---|---|---|---|---|---|---|---|
| Comparative Example 1 | 13.1 | 32.7 | 720 | 6.1 | 60.2 | 51% | 2.82 | Poor | Excellent | Good | Good | ±0.01 | 0.00035 |
| Comparative Example 2 | 13.0 | 36.3 | 718 | 5.9 | 59.2 | 52% | 3.09 | Poor | Excellent | Good | Good | ±0.03 | 0.00042 |
| Comparative Example 3 | 8.9 | 24.3 | 941 | 6.9 | 68.8 | 73% | 5.20 | Good | Poor | Poor | Poor | N/A | 0.00040 |
| Comparative Example 4 | 10.2 | 28.3 | 950 | 7.5 | 69.7 | 67% | 5.70 | Good | Excellent | Good | Poor | ±0.03 | 0.00118 |
| Comparative Example 5 | 12.1 | 32.8 | 773 | 6.1 | 61.5 | 58% | 3.70 | Poor | Excellent | Good | Good | ±0.02 | 0.00037 |
| Example 1 | 11.3 | 29.0 | 797 | 6.4 | 63.5 | 59% | 3.38 | Good | Fair | Good | Good | ±0.02 | 0.00037 |
| Example 2 | 10.8 | 28.2 | 832 | 6.5 | 64.6 | 62% | 3.85 | Good | Good | Good | Good | ±0.01 | 0.00038 |
| Example 3 | 10.3 | 27.8 | 853 | 6.5 | 65.2 | 66% | 4.34 | Good | Excellent | Good | Good | ±0.01 | 0.00038 |
| Example 4 | 10.2 | 28.2 | 874 | 6.5 | 65.6 | 68% | 4.90 | Good | Excellent | Good | Good | ±0.01 | 0.00042 |

## Claims

1. A copolymer, which is a fluorine-containing copolymer comprising tetrafluoroethylene (TFE) units and, based on the total of monomer units, 2.14-3.00 mol% of perfluoro(propyl vinyl ether) (PPVE) units, and which has a melt flow rate at 372°C of 33.0-49.9 g/10 min, determined according to the method defined in the description, and has a total number of -CF=CF$_2$, -CF$_2$H, -COF, -COOH, -COOCH$_3$, CONH, and -CH$_2$OH groups of $\leq$ 50 per 10$^6$ main-chain carbon atoms, determined according to the method defined in the description.

2. An injection molded article, comprising the copolymer of claim 1.

3. A coated electric wire, comprising a coating layer comprising the copolymer of claim 1.

4. A formed article, which comprises the copolymer of claim 1 and is a joint, flowmeter body, or an electric wire coating.

## Patentansprüche

1. Copolymer, das ein fluorhaltiges Copolymer ist, umfassend Tetrafluorethylen-(TFE)-Einheiten und, bezogen auf die Gesamtmenge der Monomereinheiten, 2,14-3,00 Mol-% an Perfluor(propylvinylether)-(PPVE)-Einheiten, und das eine Schmelzflussrate bei 372°C von 33,0-49,9 g/10 min, bestimmt gemäß dem in der Beschreibung definierten Verfahren, aufweist, und eine Gesamtzahl an -CF=CF$_2$, -CF$_2$H, -COF, -COOH, -COOCH$_3$, CONH$_2$ und -CH$_2$OH-Gruppen von $\leq$ 50 pro 10$^6$ Kohlenstoffatomen der Hauptkette, bestimmt gemäß dem in der Beschreibung definierten Verfahren, aufweist.

2. Spritzgegossener Artikel, der das Copolymer nach Anspruch 1 umfasst.

3. Beschichteter elektrischer Draht, der eine Beschichtungsschicht umfasst, die das Copolymer nach Anspruch 1 umfasst.

4. Geformter Artikel, der das Copolymer nach Anspruch 1 umfasst und ein Verbindungsstück, ein Durchflussmesserkörper oder eine Beschichtung für elektrische Drähte ist.

## Revendications

1. Copolymère, qui est un copolymère contenant du fluor comprenant des unités de tétrafluoroéthylène (TFE) et, sur la base du total des unités monomères, de 2,14 % en moles à 3,00 % en moles d'unités de perfluoro(propyl vinyl éther) (PPVE), et qui présente un indice de fluidité à chaud à 372 °C compris entre 33,0 g/10 min et 49,9 g/10 min, déterminé selon le procédé défini dans la description, et présente un nombre total de groupes -CF=CF$_2$, -CF$_2$H, -COF, -COOH, -COOCH$_3$, CONH$_2$ et -CH$_2$OH de $\leq$ 50 par 10$^6$ atomes de carbone de la chaîne principale, déterminé selon le procédé défini dans la description.

2. Article moulé par injection, comprenant le copolymère selon la revendication 1.

3. Fil électrique enrobé, comprenant une couche d'enrobage comprenant le copolymère selon la revendication 1.

4. Article formé, qui comprend le copolymère selon la revendication 1 et est un raccord, un corps de débitmètre, ou un enrobage de fil électrique.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018523272 W
- US 2020332037 A1
- JP 2009059690 A
- EP 1287046 B1